# EUROPEAN PATENT SPECIFICATION

(11) **EP 3 147 157 B1**
(45) Date of publication and mention of the grant of the patent: **23.03.2022**
(21) Application number: 16184846.0
(22) Date of filing: 19.08.2016
(51) Int. Cl.: B60Q 1/24, B60Q 1/08, B60Q 1/18

(54) **VEHICLE HEADLAMP SYSTEM**
FAHRZEUGSCHEINWERFERSYSTEM
SYSTÈME DE PHARE POUR VÉHICULE

(30) Priority: 24.09.2015 JP 2015186937
(43) Date of publication of application: 29.03.2017
(73) Proprietor: STANLEY ELECTRIC CO., LTD., Tokyo 153-8636 (JP)
(72) Inventor: KITA, Yasushi, Tokyo 153-8636 (JP); UCHIDA, Mitsuhiro, Tokyo 153-8636 (JP); FUJIWARA, Chika, Tokyo 153-8636 (JP)
(74) Representative: Klang, Alexander H.

(56) References cited:
- EP-A1- 2 631 122
- EP-A1- 2 700 538
- EP-A2- 2 381 162
- WO-A1-2011/047751
- DE-A1- 10 354 104
- DE-A1-102014 000 935

## Description

### BACKGROUND OF THE INVENTION

### Field of the Invention

The present invention relates to a vehicle headlamp system that irradiates light onto an object, such as a pedestrian that exists in front of the vehicle, to inform a driver of a position of the object.

### Description of the Background Art

JP 2013-124092 A discloses a technique for informing a pedestrian that the vehicle is advancing toward a pedestrian by irradiating a laser beam in front of the vehicle. The laser beam of this preceding technology is, for example, projected onto a road surface in front of the pedestrian in correspondence with a direction in which the pedestrian is moving.

However, in the prior art described above, the main focus is to inform the pedestrian of the existence of the vehicle and, as means for achieving this, the laser beam is irradiated onto the road surface and not, therefore, onto the actual pedestrian.

As a result, the visibility of the pedestrian from the viewpoint of the driver is not always favorable, making it inconveniently difficult for the driver to detect the pedestrian.

EP 2 631 122 A1 discloses a headlamp apparatus and headlamp control system, and was used as a basis for the preamble of claim 1. When a person existing ahead of a vehicle is detected based on an image captured by a camera configured to capture ahead of the vehicle, illumination regions are moved in a right and left direction so as to include the person. Also, non-illumination regions are formed in the illumination regions so that the non-illumination regions include at least a head of the person.

EP 2 700 538 A1 discloses an obstacle detecting device including a light source having two LED units each for emitting visible light and an infrared light unit for emitting infrared light; and a rotating reflector configured to be rotated in one direction around a rotational shaft while reflecting the visible light and the infrared light emitted from the light source. The rotating reflector is configured, by its rotating movement, to emit the visible light from each of the LED units as an irradiation beam such that a first light distribution pattern is formed by scanning with the irradiation beam, and to emit the infrared light from the infrared light unit as an irradiation beam such that a second light distribution pattern is formed by scanning with the irradiation beam.

It is therefore an object of the present invention to provide a technique which makes it possible for the driver to easily recognize a pedestrian that exists in front of the vehicle.

### SUMMARY OF THE INVENTION

A vehicle headlamp system according to the present invention is provided as set forth in claim 1. Preferred embodiments of the present invention may be gathered from the dependent claims.

According to the above-described configuration, the beam width is variably set in accordance with the distance between the pedestrian and the vehicle, thereby forming a wide marking beam when the pedestrian is near the vehicle and an apparent width of the pedestrian is large, and forming a narrow marking beam when the pedestrian is far away and the apparent width of the pedestrian is small. This makes it possible to achieve irradiation of a marking beam with less sense of incongruity, and allow the driver to easily recognize a pedestrian that exists in front of the vehicle.

In the vehicle headlamp system described above, preferably the marking beam setting unit sets the beam width to a constant value when the distance is in a range greater than a predetermined value.

When the distance from the pedestrian increases to a certain degree, the beam width set in accordance with the distance may become too small, reducing the visibility of the marking beam. Thus, when the distance is in a range greater than the predetermined value (a range of 60 m or greater, for example), the beam width is set to a constant value, making it possible to prevent a reduction in visibility of the marking beam.

In the vehicle headlamp system described above, preferably the marking beam setting unit sets the beam width in stages with respect to the size of the distance.

This makes it possible to relatively increase the resolution of the beam width when the beam width is made variable in accordance with distance, thereby making it possible to use a lamp unit having a simpler configuration.

In the vehicle headlamp system described above, the marking beam setting unit is capable of setting the beam irradiation position and the beam width of the marking beam substantially left-right symmetrically with reference to the position of the pedestrian.

Further, in the vehicle headlamp system described above, preferably the pedestrian detecting unit detects a movement direction of the pedestrian, and the marking beam setting unit sets the beam irradiation position and the beam width of the marking beam left-right asymmetrically, making the movement direction side wider with reference to the position of the pedestrian.

The marking beam widens in correspondence with the movement direction of the pedestrian, making it possible for the driver to intuitively identify the movement direction of the pedestrian visually, and further increase the visibility of the pedestrian.

### BRIEF DESCRIPTION OF THE DRAWINGS

FIG. 1 is a block diagram showing the configuration of a vehicle headlamp system of one embodiment.
FIGs. 2A to 2D are schematic front views illustrating configuration examples of the headlamp unit. The embodiment of Fig. 2C is not according to the invention.
FIGs. 3A and 3B are drawings showing a configuration example of the ADB module included in the headlamp unit.
FIGs. 4A to 4C are graphs and a table for explaining the relationship between the distance between the pedestrian and the vehicle, and the beam width of the marking beam.
FIG. 5 is a flowchart showing the operation procedure of the vehicle headlamp system.
FIGs. 6A to 6C are drawings schematically illustrating a state of irradiation by the marking beam.
FIGs. 7A to 7C are drawings schematically illustrating a state of light irradiation by the headlamp units. Fig. 7C is illustrating an illumination state in which the high beam is in full range and the marking beam is highlighting a pedestrian in a manner defined in claim 1.
FIG. 8 is a drawing schematically illustrating a state of light irradiation of the marking beam in another embodiment.
FIG. 9 is a drawing showing a configuration example of a marking beam module that scans laser light.

### DESCRIPTION OF THE PREFERRED EMBODIMENTS

The following describes embodiments of the present invention with reference to drawings.

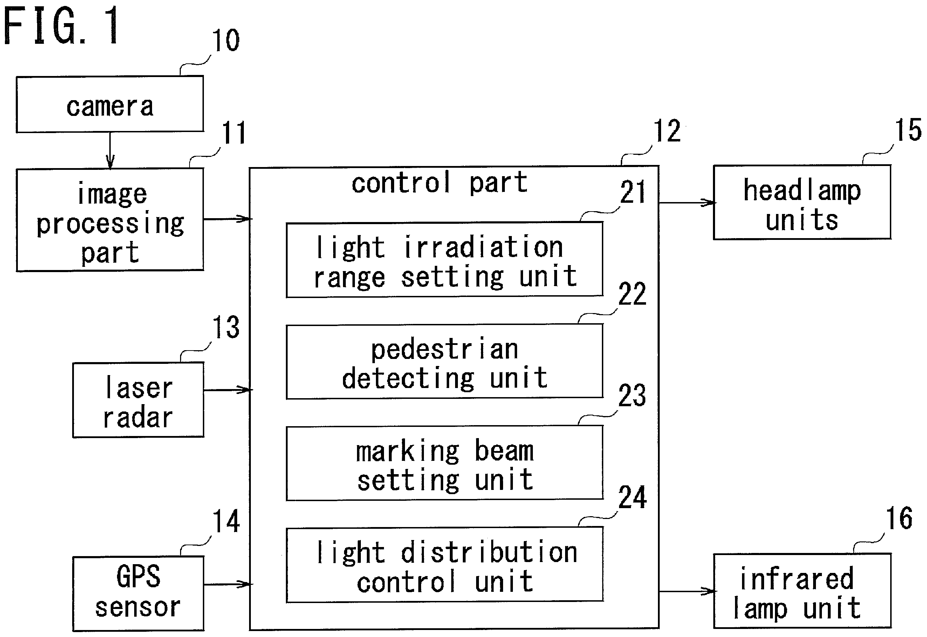

FIG. 1 is a block diagram showing the configuration of a vehicle headlamp system of one embodiment. The vehicle headlamp system of this embodiment is constituted by including a camera 10, an image processing part 11, a control part 12, a laser radar 13, a GPS sensor 14, headlamp units 15, and an infrared lamp unit 16.

The camera 10 is provided in a predetermined position (such as on a dashboard, in an upper portion of a front windshield, or the like, for example) of the vehicle, and captures images of the space in front of the vehicle. The camera 10 of this embodiment supports each wavelength band of visible light and infrared light.

The image processing part 11 detects a position of an oncoming vehicle or a preceding vehicle that exists in front of the vehicle (hereinafter simply referred to as "forward vehicle") on the basis of an image of the space in front of the vehicle captured by the camera 10.

The control part 12 performs control for selectively irradiating light by the headlamp units 15 in accordance with a position of the forward vehicle and the pedestrian detected by the image processing part 11.

The laser radar 13 irradiates, for example, a laser light of a near infrared region (a wavelength of 870 nm, for example) in front of the vehicle and detects a pedestrian, a vehicle, a road, a geographical feature, and the like that exist in front of the vehicle on the basis of the reflected light. In this embodiment, the laser radar 13 is mainly used to detect the position of a pedestrian that exists in front of the vehicle and the distance between the pedestrian and the vehicle.

The GPS sensor 14 is used for receiving a signal from a GPS satellite and detecting a current position of the vehicle on the basis of the signal.

The headlamp units 15 are each installed on the left and the right of a front portion of the vehicle, and are used to irradiate light (visible light) in front of the vehicle.

The infrared lamp unit 16 is installed on the front portion of the vehicle, and is used to irradiate infrared light in front of the vehicle.

The control unit 12 described above is configured by executing a predetermined operation program in a computer system that includes a CPU, a ROM, a RAM, and the like, for example, and includes a light irradiation range setting unit 21, a pedestrian detecting unit 22, a marking beam setting unit 23, and a light distribution control unit 24 as a function block.

The light irradiation range setting unit 21 detects the position of the forward vehicle on the basis of the detection result of the forward vehicle by the image processing unit 11 and, of the entire range that can be irradiated by light by the headlamp units 15, sets a predetermined range that includes the position of the forward vehicle as a non-irradiation range and the rest as a light irradiation range on the basis of the detection.

The pedestrian detecting unit 22 detects the position of the pedestrian that exists in front of the vehicle and the distance between the pedestrian and the vehicle on the basis of the detection result in front of the vehicle by the laser radar 13.

The marking beam setting unit 23 sets the irradiation position of the marking beam (hereinafter referred to as "beam irradiation position") on the basis of the position of the pedestrian and the distance between the pedestrian and the vehicle detected by the pedestrian detecting unit 22. At this time, the marking beam setting unit 23 variably sets the marking beam width (hereinafter referred to as "beam width") in accordance with the distance between the pedestrian and the vehicle. Specifically, the beam width is set increasingly greater as the distance between the pedestrian and the vehicle decreases.

The light distribution control unit 24 generates a control signal for forming a light distribution pattern on the basis of the light irradiation range and the non-irradiation range set by the light irradiation range setting unit, and outputs the control signal to the headlamp units 15. Further, the light distribution control unit 24 generates a control signal for forming the marking beam on the basis of the beam irradiation position and the beam width set by the marking beam setting unit 23, and outputs the signal to the headlamp units 15.

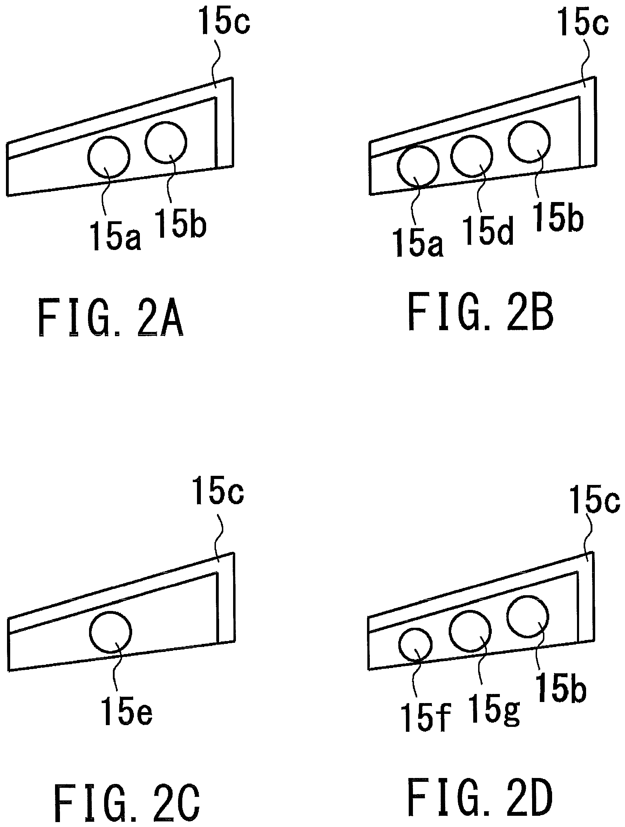

FIGs. 2A to 2D are schematic front views illustrating configuration examples of the headlamp unit. It should be noted that while each figure shows a headlamp unit installed on the front left side of the vehicle, the headlamp unit installed on the front right side of the vehicle also comprises a left-right symmetrical configuration. The headlamp unit 15 of the configuration example illustrated in FIG. 2A is configured to include an adaptive driving beam (ADB) module 15a, a low beam module 15b, and a position/daytime running lamp (DRL) module 15c. The ADB module 15a is a module for irradiating a selective high beam (driving beam) that shades the position where the forward vehicle exists. The low beam module 15b is a module for irradiating a low beam (dipped beam). The position/DRL module 15c is a module for irradiating light for improving visibility of the vehicle from the viewpoint of surrounding vehicles and pedestrians. In the headlamp unit 15 of this configuration example, a marking beam is also formed by the ADB module 15a.

The headlamp unit 15 of the configuration example illustrated in FIG. 2B is the configuration of the headlamp unit 15 in FIG. 2A described above, with an ADB module 15d further added. The headlamp unit 15 of the configuration example illustrated in FIG. 2C comprises a low/ADB module 15e that includes both of the functions of the ADB module 15a and the low beam module 15b of the headlamp unit 15 in FIG. 2A described above. The headlamp unit 15 of the configuration example illustrated in FIG. 2D comprises a marking beam module 15f for forming the marking beam, a high beam module 15g for forming a high beam, and the low beam module 15b.

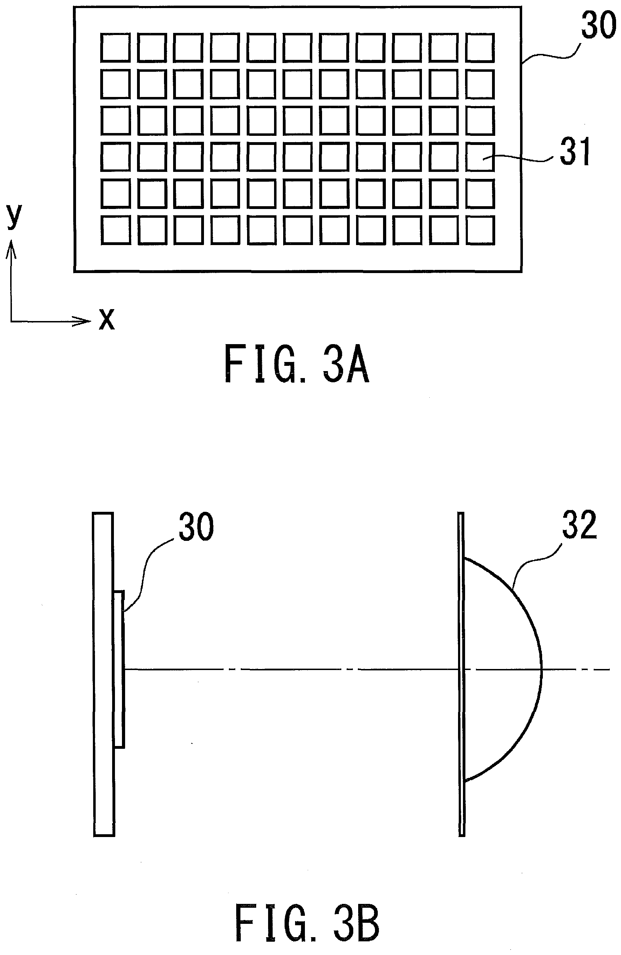

FIGs. 3A and 3B are drawings showing a configuration example of the ADB module included in the headlamp unit. The ADB module 15a is constituted by including an LED array 30 and a projection lens 32 (refer to FIG. 3B). The LED array 30 includes a plurality of LEDs 31 arranged in a matrix shape (refer to FIG. 3A). The LEDs 31 may be arranged in a lattice shape such as illustrated or, for example, a zigzag shape. The LEDs 31 are individually controlled to turn on by a LED unit driving part which is not shown. The light emitted from the LEDs 31 of the LED array 30 is projected in front of the vehicle by the projection lens 32. The LEDs 31 are individually controlled to turn on and off in correspondence with the light irradiation range and non-irradiation range set by the light irradiation range setting unit 21 of the control part 12, thereby forming a preferred light distribution pattern and achieving selective light irradiation in accordance with the position of the forward vehicle. For example, the light-emitting unit size of each of the LEDs 31 is set to 0.7 mm x 0.7 mm and the lens diameter and the lens focal point of the projection lens are set to about 700 mm and 60 mm to 80 mm, respectively, making it possible to irradiate light using a beam width having a resolution of about 1° when expressed as an angle toward the front of the vehicle. According to this embodiment, the marking beam is also irradiated by this ADB module 15a.

It should be noted that the ADB module 15d and the combined module 15e described above have a configuration similar to that of the ADB module 15a. Further, the description given below is provided under the premise of use of the headlamp unit 15 in the configuration example illustrated in FIG. 2A.

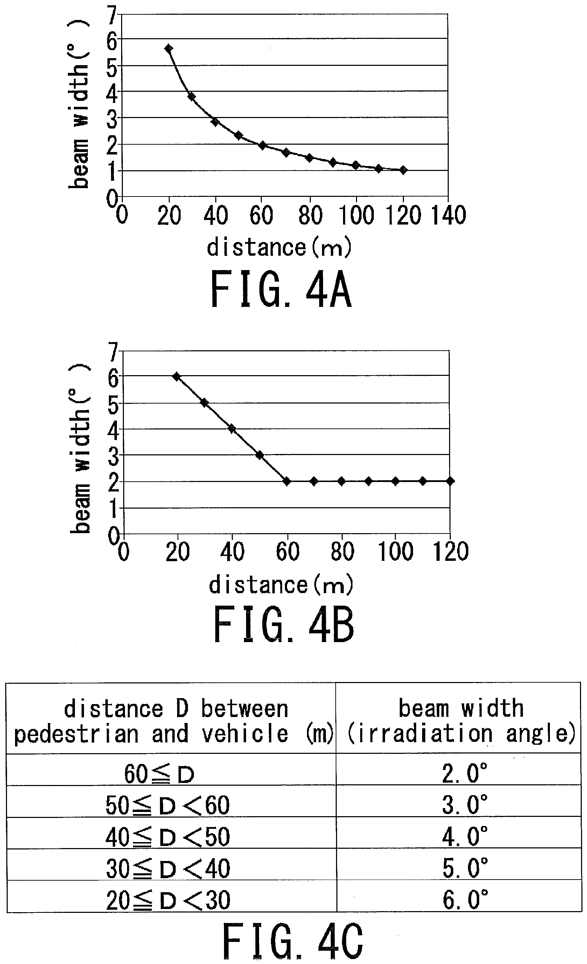

FIGs. 4A to 4C are graphs and a table for explaining the relationship between the distance between the pedestrian and the vehicle, and the beam width of the marking beam. The premise of this embodiment is irradiation of a marking beam based on an approximate human width of 0.5 m and left and right margins of 0.25 m each. According to this premise, a width of 1.0 m is required for the beam width of the marking beam. The graph illustrated in FIG. 4A shows the distance between the pedestrian and the vehicle on the horizontal axis, and the value of a 1.0-m beam width converted into a viewing angle (degrees) on the vertical axis. As understood from this graph, a 2.0° beam width is required to irradiate a marking beam having a 1.0-m width onto a pedestrian positioned at a distance of approximately 60 m, for example. Then, the relationship is such that the beam width increases as the distance decreases.

On the basis of the relationship shown in FIG. 4A, in this embodiment, the beam width of the marking beam is set by means of the relationship shown in FIG. 4B. Here, while the beam width is set to 1.0° when the distance is 60 m, similar to the value shown in FIG. 4A, the width of the marking beam irradiated onto the pedestrian is set so as to further increases when the distance is a value less than 60 m. For example, while the required beam width is approximately 4.0° when the distance is 30 m as shown in FIG. 4A, the beam width when actually controlled is set to 5.0°. That is, the beam width is widened. As the distance between the pedestrian and the vehicle decreases, the position of the pedestrian moves into the vicinity of the field of vision of the driver, causing the resolution at the time of pedestrian recognition by the driver to decrease. The widening of the beam width compensates for this, improving visibility. Further, when the distance is a value greater than 60 m, the beam width does not decrease in accordance with distance, but is rather fixed to 2.0°. This is because, while the width of the pedestrian that is to be recognized becomes increasingly narrow when the distance is greater than 60 m, the visibility of the pedestrian from the viewpoint of the driver does not improve even if the beam width decreases in association thereto.

FIG. 4C is a table showing setting examples of a numerical value when the beam width is to be actually set on the basis of the relationship shown in FIG. 4B described above. In this embodiment, the beam width is set to 2.0° with a distance D between the pedestrian and the vehicle in a range of 60 m or greater, 3.0° with the distance D within a range of 50 m or greater and less than 60 m, 4.0° with the distance D within a range of 40 m or greater and less than 50 m, 5.0° with the distance D within a range of 30 m or greater and less than 40 m, and 6.0° with the distance D within a range of 20 m or greater and less than 30 m. That is, the beam width is set in stages. It should be noted that this is merely an example, and the beam width may continually change in accordance with the distance D.

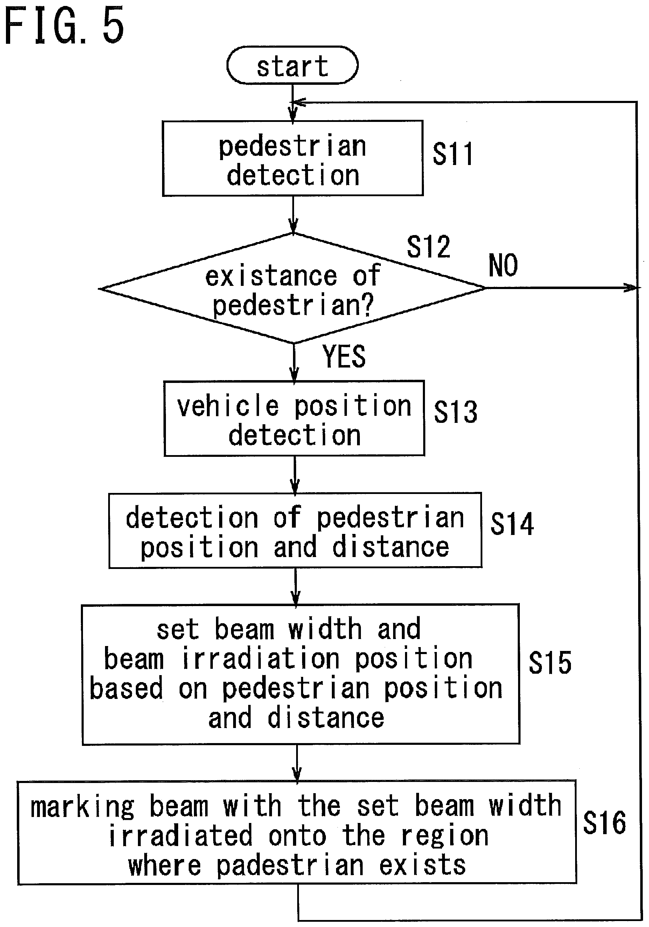

FIG. 5 is a flowchart showing the operation procedure of the vehicle headlamp system. Here, only the operation procedure of the irradiation of the marking beam is shown. The following will be described with reference to FIG. 5.

The pedestrian detecting unit 22 of the control unit 12 detects whether or not there is a pedestrian in front of the vehicle on the basis of the output of the laser radar 13 (step S11), and determines whether or not a pedestrian exists (step S12). When a pedestrian does not exist, the flow returns to step S11 (step S12: No).

When the pedestrian exists (step S12: Yes), the pedestrian detecting unit 22 detects the current position of the vehicle on the basis of the detection result of the GPS sensor 14 (step S13). Next, the pedestrian detecting unit 22 detects the position of the pedestrian and the distance between the pedestrian and the vehicle on the basis of the detection result of the laser radar 13 and the current position of the vehicle detected by the GPS sensor 14 (step S14).

It should be noted that the pedestrian detecting unit 22 may detect whether or not there is a pedestrian, the position of the pedestrian, and the distance between the pedestrian and the vehicle using the detection result of the image processing unit 11. Further, the pedestrian detecting unit 22 may detect the distance between the pedestrian and the vehicle using only the detection result of the laser radar 13.

Next, the marking beam setting unit 23 sets the beam width and the beam irradiation position of the marking beam on the basis of the distance D between the pedestrian and the vehicle detected by the pedestrian detecting unit 22 (step S15). The set value of the beam width in accordance with distance is as described above (refer to FIG. 4C).

Next, the light distribution control unit 24 generates a control signal for forming the marking beam on the basis of the beam irradiation position and the beam width set by the marking beam setting unit 23, and outputs the signal to the headlamp units 15. Based on this control signal, the marking beam is irradiated onto a region where the pedestrian exists by the headlamp units 15 (step S16).

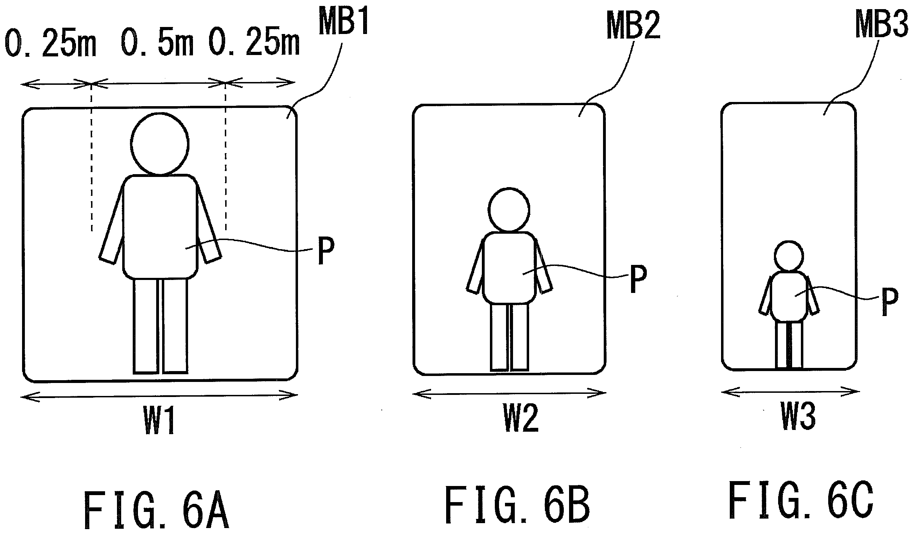

FIGs. 6A to 6C are drawings schematically illustrating a state of irradiation by the marking beam. As illustrated in FIG. 6A, when a pedestrian P exists at a distance (20 to 30 m, for example) relatively near the vehicle, a marking beam MB 1 of a wide beam width W1 (6.0°, for example) is formed and irradiated as illustrated. Further, as illustrated in FIG. 6B, when the distance between the pedestrian P and the vehicle is great (40 to 50 m, for example) and the apparent size of the pedestrian P is small, a marking beam MB2 having a beam width W2 (4.0°, for example) set to a smaller value in accordance with the distance is formed and irradiated. Further, as illustrated in FIG. 6C, when the distance between the pedestrian P and the vehicle is even greater (60 m or greater, for example) and the apparent size of the pedestrian P is even smaller, a marking beam MB3 having a beam width W3 (2.0°, for example) set to a smaller value in accordance with the distance is formed and irradiated. Each of the marking beams MB1, MB2, and MB3 may be irradiated by continually keeping the beam on or by repeatedly turning the beam on and off (flashing). When flashing is used, the beam is preferably repeatedly turned on and off to an extent that the flashing can be sensed by a person, and is preferably, for example, repeatedly turned on and off at a frequency of 2 Hz to 10 Hz, inclusive.

It should be noted that while each of the marking beams MB1, MB2, and MB3 is set to the same beam height, the beam height may be decreased in accordance with the distance between the vehicle and the pedestrian so as to follow the apparent size of the pedestrian P.

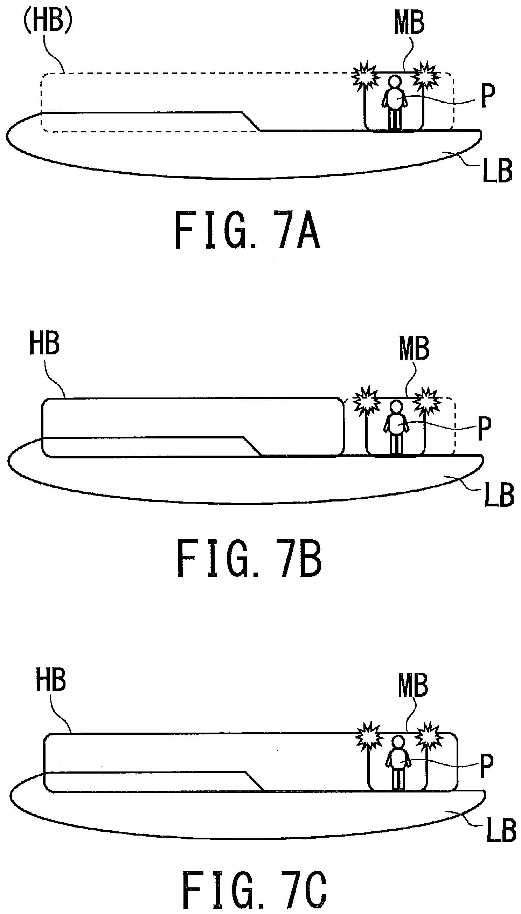

FIGs. 7A to 7C are drawings schematically illustrating a state of light irradiation by the headlamp units. FIG. 7A shows a state of light irradiation when the marking beam MB is irradiated onto the pedestrian P that exists on the frontward right side of the vehicle, in accordance with the position and distance of the pedestrian P, when a low beam LB is irradiated from the headlamp units 15 and a high beam HB is not irradiated. FIG. 7B shows a state of light irradiation when the marking beam MB is irradiated onto the pedestrian P that exists on the frontward right side of the vehicle, in accordance with the position and distance of the pedestrian P, when the low beam LB is irradiated and the high beam HB is partially irradiated from the headlamp units 15. FIG. 7C shows a state of light irradiation when the marking beam MB is irradiated onto the pedestrian P that exists on the frontward right side of the vehicle, in accordance with the position and distance of the pedestrian P, when the low beam LB is irradiated and the high beam HB is irradiated in full range from the headlamp units 15. In this case, according to the invention, the amount of light (light intensity) of the marking beam MB is greater than that of the high beam HB, and/or the marking beam MB is made to turn on and off.

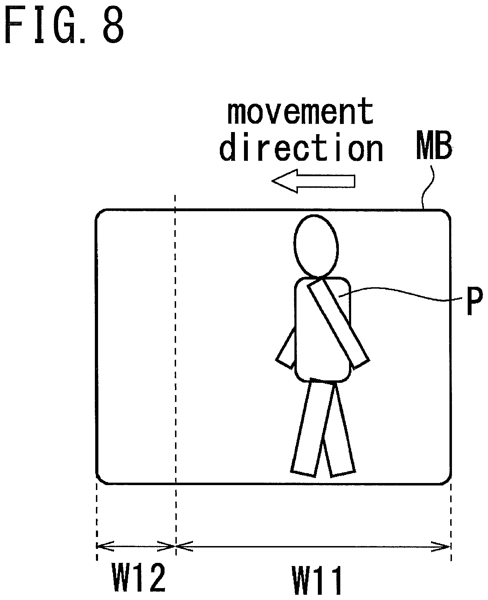

However, in the above-described embodiment, the width of the marking beam may be increased with respect to the movement direction of the pedestrian when the pedestrian is crossing (moving). FIG. 8 is a drawing schematically illustrating a state of light irradiation of the marking beam in this embodiment. As illustrated, the movement direction of the pedestrian is from right to left on the sheet of FIG. 8, for example. The movement direction of the pedestrian can be determined by, for example, acquiring the positions of the pedestrian at a time t1 and a next time t2, which are obtained by image recognition by the image processing unit 11, and detecting the direction in which the position of the pedestrian moves by the pedestrian detecting unit 22. In this case, the width of the marking beam MB is expanded to the movement direction side (left side) of the pedestrian. Specifically, with respect to a beam width W11 (1.0 m, for example) left-right symmetrically set about the pedestrian as described above, the width of the marking beam MB is expanded to the left side by an amount equivalent to a beam width W12 to set the irradiation range of the marking beam MB.

In the case described above, the size of the beam width W12 by which the marking beam MB is expanded is preferably set in accordance with the distance D between the pedestrian and the vehicle so as to increase as the distance decreases. For example, based on the premise that the beam width W12 by which the marking beam MB is expanded increases as the distance decreases, (a) the beam width W12 can be set within the range of 0.2° to 0.7° inclusive when the distance D is 60 m or greater, (b) the beam width W12 can be set within the range of 0.3° to 0.8° inclusive when the distance D is 50 m or greater and less than 60 m, (c) the beam width W12 can be set within the range of 0.4 ° to 0.9 ° inclusive when the distance D is 40 m or greater and less than 50 m, (d) the beam width W12 can be set within the range of 0.7 ° to 1.2 ° inclusive when the distance D is 30 m or greater and less than 40 m, (e) the beam width W12 can be set within the range of 1.1 ° to 1.6° inclusive when the distance D is 20 m or greater and less than 30 m.

Here, in the other embodiment described above, the beam width of the marking beam MB needs to be variably set to a resolution of 0.1° or less. In this case, such a resolution may be supported by making the optical system or the LED size of the ADB module described above more minute, or preferably a type of module such as exemplified below that scans laser light or the like is used as the marking beam module.

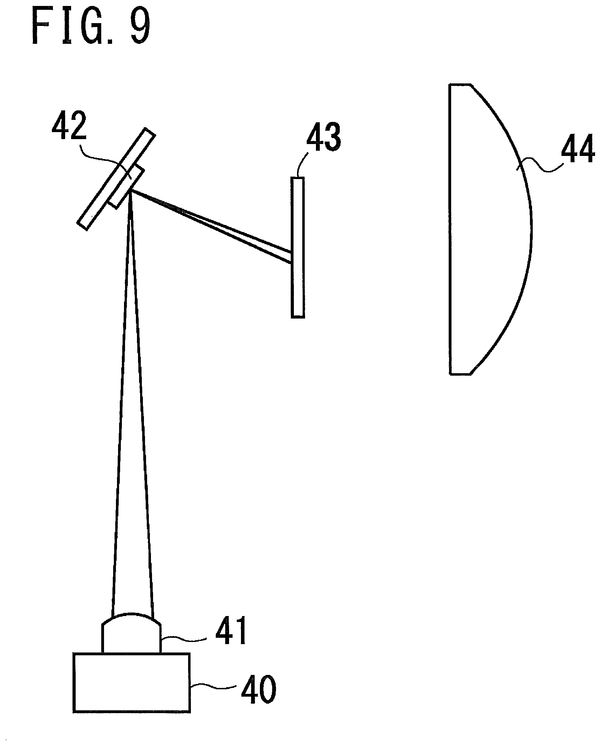

FIG. 9 is a drawing showing a configuration example of a marking beam module that scans laser light. The marking beam module illustrated in FIG. 9 is constituted by including a laser diode (a light-emitting element) 40, a condenser lens 41, an MEMS (Micro Electro Mechanical Systems) mirror (a scanning element) 42, a wavelength conversion member 43, and a projection lens 44.

The laser diode 40 is a semiconductor light-emitting element that emits a laser beam of a blue spectral region (an emission wavelength of 450 nm, for example) as an excitation light, for example. The MEMS mirror 42 scans a laser beam that enters from the laser diode 40 in two-dimensional directions (a horizontal direction and a vertical direction) and causes the laser beam to enter the wavelength conversion member 43.

The wavelength conversion member 43 converts at least a portion of the entered laser beam into a different wavelength. According to this embodiment, the wavelength conversion member 43 includes a fluorescent substance that is excited by the laser beam and produces yellow light. The colors of this yellow light and the laser beam (blue) that is transmitted through the wavelength conversion member 43 are mixed, thereby achieving a pseudo white light. The projection lens 44 projects the light emitted from the wavelength conversion member 43 toward the front of the vehicle.

In this marking beam module, the laser beam emitted from the laser diode 40 is condensed by a condenser lens 41, and enters the MEMS mirror 42. The MEMS mirror 42 scans this laser beam in two-dimensional directions and causes the laser beam to enter the wavelength conversion member 43. By synchronizing the scan operation by the MEMS mirror and the on/off driving of the laser diode 40, a marking beam can be irradiated onto a pedestrian at a resolution described above.

According to the foregoing embodiments, the marking beam where the beam width is variably set in accordance with the distance between the vehicle and the pedestrian is irradiated onto a pedestrian, it possible for the driver to easily recognize a pedestrian that exists in front of the vehicle.

Note that this invention is not limited to the subject matter of the foregoing embodiments, and can be implemented by being variously modified within the scope of the appended claims. For example, while the above-described embodiments have described an illustrative scenario in which the present invention is applied to a headlamp unit that selectively irradiates light in accordance with the position of the forward vehicle, the present invention can also be applied to a conventional headlamp unit that irradiates light based on a low beam and high beam combination.

## Claims

1. A vehicle headlamp system that is configured to irradiate a marking beam (MB; MB1, MB2, MB3) onto a pedestrian (P) that exists in front of the vehicle, the vehicle headlamp system comprising:
a pedestrian detecting unit (13) that is configured to detect a position of the pedestrian (P) that exists in front of the vehicle, and a distance between the vehicle and the pedestrian (P);
a marking beam setting unit (23) that is configured to set a beam irradiation position of the marking beam (MB; MB1, MB2, MB3) in correspondence with the position of the pedestrian (P) detected by the pedestrian detecting unit (13);
a light distribution control unit (24) that is configured to generate a control signal for forming the marking beam (MB; MB1, MB2, MB3) in accordance with the beam irradiation position set by the marking beam setting unit (23); and
a headlamp unit (15) that irradiates visible light and
that is configured to form the marking beam (MB; MB1, MB2, MB3) in accordance with the control signal generated by the light distribution control unit (24) and to form a low beam (LB) and a high beam (HB);
wherein the marking beam setting unit (23) is configured to set the beam width (W1, W2, W3; W11, W12) so that the beam width (W1, W2, W3; W11, W12) increases as the distance decreases,
wherein the headlamp unit (15) has a first module (15b) configured to form the low beam (LB) and a second module (15a, 15g) configured to form the high beam (HB),
**characterized in that**
either the second module (15a) is further configured to form the marking beam (MB; MB1, MB2, MB3), or the headlamp unit (15) has a third module (15f) configured to form the marking beam (MB; MB1, MB2, MB3),
wherein in some states of light irradiation by the headlamp unit (15)
the marking beam (MB; MB1, MB2, MB3) is irradiated together with the high beam (HB) in full range,
wherein in this case :
- the marking beam (MB) is irradiated at a light intensity higher than the light intensity of the high beam (HB), and/or
- the marking beam (MB) is repeatedly turned on and off.

2. The vehicle headlamp system according to claim 1, wherein:
the marking beam setting unit (23) is configured to set the beam width (W1, W2, W3; W11, W12) in stages with respect to the size of the distance.

3. The vehicle headlamp system according to either claim 1 or claim 2, wherein:
the marking beam setting unit (23) is configured to set the beam irradiation position and the beam width (W1, W2, W3) of the marking beam (MB1, MB2, MB3) substantially left-right symmetrically with reference to the position of the pedestrian (P).

4. The vehicle headlamp system according to either claim 1 or claim 2, wherein:
the pedestrian detecting unit (13) is configured to detect a movement direction of the pedestrian (P); and
the marking beam setting unit (23) is configured to set the beam irradiation position and the beam width (W11, W12) of the marking beam (MB) left-right asymmetrically, making the movement direction side wider with reference to the position of the pedestrian (P).

5. The vehicle headlamp system according to any one of claims 1 to 4, wherein the beam width of the marking beam (MB; MB1, MB2, MB3) is variably set having a resolution of 0.1° or less when expressed as an angle toward the front of the own vehicle.

6. The vehicle headlamp system according to any one of claims 1 to 5, wherein the marking beam (MB; MB1, MB2, MB3) is repeatedly turned on and off at a frequency of 2 Hz or more and 10 Hz or less.

## Patentansprüche

1. Fahrzeugscheinwerfersystem, das konfiguriert ist, um einen Markierungsstrahl (MB; MB1, MB2, MB3) auf einen Fußgänger (P) zu strahlen, der vor dem Fahrzeug vorhanden ist, wobei das Fahrzeugscheinwerfersystem Folgendes aufweist:
eine Fußgängerdetektionseinheit (13), die konfiguriert ist, um eine Position des Fußgängers (P), der vor dem Fahrzeug vorhanden ist, und eine Distanz zwischen dem Fahrzeug und dem Fußgänger (P) zu detektieren;
eine Markierungsstrahleinstellungseinheit (23), die konfiguriert ist, um eine Strahlbestrahlungsposition des Markierungsstrahls (MB; MB1, MB2, MB3) in Übereinstimmung mit der Position des Fußgängers (P) einzustellen, der durch die Fußgängerdetektionseinheit (13) detektiert wurde;
eine Lichtverteilungssteuereinheit (24), die konfiguriert ist, um ein Steuersignal zum Formen des Markierungsstrahls (MB; MB1, MB2, MB3) in Übereinstimmung mit der Strahlbestrahlungsposition zu erzeugen, die durch die Markierungsstrahleinstellungseinheit (23) eingestellt wurde; und
eine Scheinwerfereinheit (15), die sichtbares Licht ausstrahlt, und die konfiguriert ist, um den Markierungsstrahl (MB; MB1, MB2, MB3) in Übereinstimmung mit dem Steuersignal zu formen, welches durch die Lichtverteilungssteuereinheit (24) erzeugt wurde, und einen tiefen Strahl (LB) und einen hohen Strahl (HB) zu formen;
wobei die Markierungsstrahleinstellungseinheit (23) konfiguriert ist, um die Strahlbreite (W1, W2, W3; W11, W12) so einzustellen, dass die Strahlbreite (W1, W2, W3; W11, W12) zunimmt, wenn die Distanz abnimmt,
wobei die Scheinwerfereinheit (15) ein erstes Modul (15b) hat, das konfiguriert ist, um den tiefen Strahl (LB) zu formen, und ein zweites Modul (15a, 15g), das konfiguriert ist, um den hohen Strahl (HB) zu formen, **dadurch gekennzeichnet, dass**
entweder das zweite Modul (15a) weiter konfiguriert ist, um den Markierungsstrahl (MB; MB1, MB2, MB3) zu formen, oder die Scheinwerfereinheit (15) ein drittes Modul (15f) hat, das konfiguriert ist, um den Markierungsstrahl (MB; MB1, MB2, MB3) zu formen,
wobei in einigen Zuständen der Lichtbestrahlung durch die Scheinwerfereinheit (15) der Markierungsstrahl (MB; MB1, MB2, MB3) zusammen mit dem hohen Strahl in einem vollen Bereich ausgestrahlt wird, wobei in diesem Fall:
- der Markierungsstrahl (MB) mit einer höheren Lichtintensität ausge strahlt wird als die Lichtintensität des hohen Strahls (HB) und/oder
- der Markierungsstrahl (MB) wiederholt an- und ausgeschaltet wird.

2. Fahrzeugscheinwerfersystem nach Anspruch 1, wobei
die Markierungsstrahleinstellungseinheit (23) konfiguriert ist, um die Strahlbreite (W1, W2, W3; W11, W12) in Stufen bezüglich der Größe der Distanz einzustellen.

3. Fahrzeugscheinwerfersystem nach entweder Anspruch 1 oder Anspruch 2, wobei
die Markierungsstrahleinstellungseinheit (23) konfiguriert ist, um die Strahlbestrahlungsposition und die Strahlbreite (W1, W2, W3) des Markierungsstrahls (MB1, MB2, MB3) im Wesentlichen links-rechts-symmetrisch mit Bezug auf die Position des Fußgängers (P) einzustellen.

4. Fahrzeugscheinwerfersystem nach entweder Anspruch 1 oder Anspruch 2, wobei
die Fußgängerdetektionseinheit (13) konfiguriert ist, um eine Bewegungsrichtung des Fußgängers (P) zu detektieren; und
die Markierungsstrahleinstellungseinheit (23) konfiguriert ist, um die Strahlbestrahlungsposition und die Strahlbreite (W11, W12) des Markierungsstrahls (MB) links-rechts-asymmetrisch einzustellen, wobei die Seite der Bewegungsrichtung bezüglich der Position des Fußgängers (P) breiter gemacht wird.

5. Fahrzeugscheinwerfersystem nach einem der Ansprüche 1 bis 4, wobei die Strahlbreite des Markierungsstrahls (MB; MB1, MB2, MB3) mit einer Auflösung von 0,1 Grad oder weniger variabel eingestellt ist, wenn dies als ein Winkel zur Front des eigenen Fahrzeugs ausgedrückt wird.

6. Fahrzeugscheinwerfersystem nach einem der Ansprüche 1 bis 5, wobei der Markierungsstrahl (MB; MB1, MB2, MB3) mit einer Frequenz von 2 Hz oder mehr und 10 Hz oder weniger an- und ausgeschaltet wird.

## Revendications

1. Système de phare de véhicule qui est configuré pour irradier un faisceau de marquage (MB ; MB1, MB2, MB3) sur un piéton (P) qui se trouve devant le véhicule, le système de phare de véhicule comprenant :
une unité de détection de piéton (13) qui est configurée pour détecter une position du piéton (P) qui se trouve devant le véhicule, et une distance entre le véhicule et le piéton (P) ;
une unité de réglage du faisceau de marquage (23) qui est configurée pour régler une position d'irradiation de faisceau du faisceau de marquage (MB ; MB1, MB2, MB3) conformément à la position du piéton (P) détectée par l'unité de détection de piéton (13) ;
une unité de commande de distribution de lumière (24) qui est configurée pour générer un signal de commande destiné à former le faisceau de marquage (MB ; MB1, MB2, MB3) conformément à la position d'irradiation du faisceau réglée par l'unité de réglage du faisceau de marquage (23) ; et
une unité de phare (15) qui irradie de la lumière visible et qui est configurée pour former le faisceau de marquage (MB ; MB1, MB2, MB3) conformément au signal de commande généré par l'unité de commande de distribution de lumière (24) et pour former un feu de croisement (LB) et un feu de route (HB) ;
dans lequel l'unité de réglage du faisceau de marquage (23) est configurée pour régler la largeur de faisceau (W1, W2, W3 ; W11, W12) de sorte que la largeur de faisceau (W1, W2, W3 ; W11, W12) augmente à mesure que la distance diminue,
dans lequel l'unité de phare (15) a un premier module (15b) configuré pour former le feu de croisement (LB) et un deuxième module (15a, 15g) configuré pour former le feu de route (HB),
**caractérisé en ce que** soit le deuxième module (15a) est en outre configuré pour former le faisceau de marquage (MB ; MB1, MB2, MB3), soit l'unité de phare (15) a un troisième module (15f) configuré pour former le faisceau de marquage (MB ; MB1, MB2, MB3),
dans lequel dans certains états de l'irradiation de lumière par l'unité de phare (15) le faisceau de marquage (MB ; MB1, MB2, MB3) est irradié en même temps que le feu de route (HB) pleine plage,
dans lequel, dans ce cas :
- le faisceau de marquage (MB) est irradié à une intensité lumineuse supérieure à l'intensité lumineuse du feu de route (HB), et/ou
- le faisceau de marquage (MB) est allumé et éteint de façon répétée.

2. Système de phare de véhicule selon la revendication 1, dans lequel :
l'unité de réglage du faisceau de marquage (23) est configurée pour régler la largeur de faisceau (W1, W2, W3 ; W11, W12) par paliers en fonction de la valeur de la distance.

3. Système de phare de véhicule selon la revendication 1 ou la revendication 2, dans lequel :
l'unité de réglage du faisceau de marquage (23) est configurée pour régler la position d'irradiation du faisceau et la largeur de faisceau (W1, W2, W3) du faisceau de marquage (MB1, MB2, MB3) sensiblement de façon symétrique à gauche et à droite par rapport à la position du piéton (P).

4. Système de phare de véhicule selon la revendication 1 ou la revendication 2, dans lequel :
l'unité de détection de piéton (13) est configurée pour détecter une direction de déplacement du piéton (P) ; et
l'unité de réglage du faisceau de marquage (23) est configurée pour régler la position d'irradiation du faisceau et la largeur de faisceau (W11, W12) du faisceau de marquage (MB) de façon asymétrique à gauche et à droite, rendant le côté de direction de déplacement plus large par rapport à la position du piéton (P).

5. Système de phare de véhicule selon l'une quelconque des revendications 1 à 4, dans lequel la largeur de faisceau du faisceau de marquage (MB ; MB1, MB2, MB3) est réglée de façon variable pour avoir une résolution de 0,1° ou moins lorsqu'elle est exprimée en termes d'angle vers l'avant du véhicule concerné.

6. Système de phare de véhicule selon l'une quelconque des revendications 1 à 5, dans lequel le faisceau de marquage (MB ; MB1, MB2, MB3) est allumé et éteint de façon répétée à une fréquence de 2 Hz ou plus et de 10 Hz ou moins.
